# EUROPEAN PATENT APPLICATION

(11) **EP 4 665 001 A2**
(43) Date of publication of application: **17.12.2025**
(21) Application number: 25213141.2
(22) Date of filing: 19.07.2022
(51) Int. Cl.: H04W 48/12

(54) **NETWORK CONFIGURATION OPTIONS FOR REDUCED CAPABILITY DEVICE COEXISTENCE WITH LEGACY NEW RADIO DEVICES**

(30) Priority: 22.07.2021 US 202163224764 P; 07.07.2022 US 202217859863
(62) Divisional of application: 22185852.5
(71) Applicant: Apple Inc., Cupertino, CA 95014 (US)
(72) Inventor: PALLE VENKATA, Naveen Kumar R., Cupertino, 95014 (US); HE, Hong, Cupertino, 95014 (US); CUI, Jie, Cupertino, 95014 (US); HU, Haijing, Cupertino, 95014 (US); ZHANG, Dawei, Cupertino, 95014 (US); ZENG, Wei, Cupertino, 95014 (US)
(74) Representative: Bateman, Samuel Alec

(57) **Abstract**

Improved network configuration options enable reduced capability (Redcap) devices to coexist with legacy devices. A master information block (MIB) *cellBarred* indication received in a Synchronization System Block (SSB) by a Redcap device may be ignored by the Redcap device, which may read a System Information Block1 (SIB1) to determine whether to connect to the cell defined by the received SSB. The Redcap device may consider the cell barred if the SIB1 includes a *cellBarred* indication targeting Redcap devices. The Redcap device may alternately search for an alternative SSB indicated by the SIB1 to determine whether to connect to the cell defined by the alternative SSB. A network node may broadcast Redcap specific and legacy specific SSBs at the same frequency location in a time-multiplexed manner, with each type of device determining cell access based on the received specific SSB. The network node may transmit SSB bursts specifically targeting Redcap devices.

## Description

### FIELD OF THE INVENTION

The present application relates to wireless communications, including providing network configuration options for the coexistence of reduced capability devices with legacy devices during wireless communications, e.g., during wireless cellular communications such as 5G-NR (NR) communications.

### DESCRIPTION OF THE RELATED ART

Wireless communication systems are rapidly growing in usage. In recent years, wireless devices such as smart phones and tablet computers have become increasingly sophisticated. In addition to supporting telephone calls, many mobile devices (i.e., user equipment devices or UEs) now provide access to the internet, email, text messaging, and navigation using the global positioning system (GPS), and are capable of operating sophisticated applications that utilize these functionalities. Additionally, there exist numerous different wireless communication technologies and standards. Some examples of wireless communication standards include GSM, UMTS (WCDMA, TDS-CDMA), LTE, LTE Advanced (LTE-A), HSPA, 3GPP2 CDMA2000 (e.g., 1xRTT, 1xEV-DO, HRPD, eHRPD), IEEE 802.11 (WLAN or Wi-Fi), IEEE 802.16 (WiMAX), BLUETOOTH^{™}, etc. A current telecommunications standard moving beyond the current International Mobile Telecommunications-Advanced (IMT-Advanced) Standards is called 5th generation mobile networks or 5th generation wireless systems, referred to as 3GPP NR (otherwise known as 5G-NR or NR-5G for 5G New Radio, also simply referred to as NR). NR proposes a higher capacity for a higher density of mobile broadband users, also supporting device-to-device, ultra-reliable, and massive machine communications, as well as lower latency and lower battery consumption, than LTE standards.

One aspect of wireless communication systems, including NR cellular wireless communications, involves scheduling communications for devices having different respective capabilities. Some devices are categorized as "reduced capability devices" or Redcap devices for short, in reference to the reduced capabilities of those devices with respect to other devices or with respect to legacy devices. Managing wireless communications of both Redcap devices and other, higher capability devices (e.g. legacy devices) within a network, e.g. within an NR network (or cell) remains challenging. Improvements in the field are desired.

### SUMMARY OF THE INVENTION

Embodiments are presented herein of, *inter alia,* of methods and procedures for network configuration options for reduced capability (Redcap) device coexistence with legacy devices, for example in NR networks. Embodiments are further presented herein for wireless communication systems containing wireless communication devices or user equipment devices (UEs) and/or base stations and access points (APs) communicating with each other within the wireless communication systems.

In order to improve the coexistence of Redcap devices with non-Redcap or legacy devices, the initial cell access procedures by mobile devices may be revised. In some embodiments, a device, for example a UE may search for and receive a cell-defining first synchronization signal block (SSB), which may include a first information block, IB (e.g. master information block, MIB) indicating whether or not a cell defined by the SSB is barred. The UE may consider the cell to be valid and not barred for the UE regardless of what is indicated by the first IB, and may proceed to read a second IB (e.g. system information block, SIB1) included in the first SSB to determine whether or not to connect to the cell. The UE may consider the cell to be valid for the device in response to the second IB including information for an initial bandwidth part (BWP) for Redcap devices. Alternatively, the UE may consider the cell to be barred for the UE in response to the second IB not including information for an initial BWP for Redcap devices. The first IB may still indicate whether or not the cell is barred for one or more additional devices different from the UE, e.g. legacy devices. In addition, the UE may consider the cell to be barred for the UE in response to the second IB indicating that the cell is barred.

In some embodiments, the UE may search for and locate a cell-defining second SSB indicated by the second IB, in response to the second IB indicating that the cell is barred. The UE may receive the second SSB and may determine, based on information included in the second SSB, whether to connect to a second cell defined by the second SSB. Alternatively, the UE may determine, from information included in the second IB, the location of a third SSB that is not on a Global Synchronization Channel Number and defines a third cell. The UE may receive the third SSB and may determine, based on information included in the third SSB, whether to connect to the third cell.

In some embodiments, a network node may broadcast a cell-defining first SSB for a first group of devices, and may also broadcast a cell-defining second SSB for a second group of devices different from and non-overlapping with the first group of devices, with the first SSB and the second SSB broadcast at a same frequency location in a time-multiplexed manner. The first SSB and the second SSB may define different respective initial downlink BWPs meant for the first group of devices and the second group of devices. The different respective initial downlink BWPs may overlap. The first group of devices may be Redcap devices while the second group of devices may be legacy devices.

In some embodiments, a UE may receive a cell-defining first SSB at a first frequency location, and may search for a cell-defining second SSB at the first frequency location at a different time, in response to the first SSB indicating that a cell defined by the first SSB is barred for the device.

In some embodiments, a network node may transmit a first SSB, which includes a first information block indicating a set of SSB burst positions corresponding to a number of SSB bursts broadcast by the network node. The first information block may additionally indicate which of the number of SSB bursts are intended for a first group of devices (e.g. Redcap devices) and which of the plurality of SSB bursts are intended for a second group of devices different from and non-overlapping with the first group of devices (e.g. legacy devices). One or more single SSB bursts of the number of SSB bursts may each include a first number of SSBs used on a first frequency in a cell defined by the first SSB. The first number of SSBs may include a first group of SSBs and a second group of SSBs which not overlap with each other. The first group of SSBs may include respective first master information blocks (MIBs) intended for the first group of devices and the second group of SSBs may include respective second MIBs intended for the second group of devices. The respective first MIBs and the respective second MIBs indicate whether the cell is barred for a device belonging to the first group of devices or a device belonging to the second group of devices. The first MIB and the second MIB may respectively indicate different respective control resource sets for the first group of devices and the second group of devices. In some embodiments, the first number of SSBs may include respective MIBs indicating whether the cell is barred, and may also include respective second information blocks indicating a frequency location of an information block defining a cell for a device belonging to the first group of devices and not the second group of devices.

Note that the techniques described herein may be implemented in and/or used with a number of different types of devices, including but not limited to, base stations, access points, cellular phones, portable media players, tablet computers, wearable devices, head-mounted displays, VR displays, wearable glasses, XR devices, and various other computing devices.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

Figure 1 illustrates an exemplary (and simplified) wireless communication system, according to some embodiments;
Figure 2 illustrates an exemplary base station in communication with an exemplary wireless user equipment (UE) device, according to some embodiments;
Figure 3 illustrates an exemplary block diagram of a UE, according to some embodiments;
Figure 4 illustrates an exemplary block diagram of a base station, according to some embodiments;
Figure 5 shows an exemplary simplified block diagram illustrative of cellular communication circuitry, according to some embodiments;
Figure 6 shows a simplified diagram illustrating channel bandwidth (CHBW) and bandwidth part (BWP) configuration for initial access to a cell (e.g. via a base station) by a device, e.g. wireless communication device or user equipment device (UE);
Figure 7 shows a simplified diagram illustrating Synchronization System Block (SSB) transmissions and CHBW and BWP configuration using a Global Synchronization Channel Number (GSCN);
Figure 8 shows a simplified diagram illustrating potential issues when transmitting SSB and configuring CHBW and BWP for simultaneously operating reduced capability (Redcap) devices and legacy devices;
Figure 9 shows a table illustrating a proposed solution that ensures successful coexistence of Redcap devices and legacy devices based on a cell barring indication, according to some embodiments;
Figure 10 shows a simplified diagram illustrating SSB transmission(s) and channel CHBW and BWP configuration for initial access to a cell by a device when the initial downlink bandwidth part is greater than 20MHz, according to some embodiments;
Figure 11 shows a simplified diagram illustrating SSB transmission(s) and channel CHBW and BWP configuration for initial access to a cell by a device when the initial downlink bandwidth part is 20MHz, according to some embodiments;
Figure 12 shows a simplified diagram illustrating SSB transmission(s) and channel CHBW and BWP configuration for initial access to a cell by a device with redirection based on PDCCH-ConfigSIB1, according to some embodiments;
Figure 13 shows a simplified diagram illustrating SSB transmission(s) and channel CHBW and BWP configuration for initial access to a cell by a device with redirection based on SIB1, according to some embodiments; and
Figure 14 shows a simplified diagram illustrating time domain multiplexing of Redcap SSB and non-Redcap SSB transmissions, according to some embodiments.

While features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION OF THE EMBODIMENTS

### Acronyms

Various acronyms are used throughout the present application. Definitions of the most prominently used acronyms that may appear throughout the present application are provided below:
- **AF:** Application Function
- **AMF:** Access and Mobility Management Function
- **AMR:** Adaptive Multi-Rate
- **AP:** Access Point
- **APN:** Access Point Name
- **APR:** Applications Processor
- **AS:** Access Stratum
- **BS:** Base Station
- **BSR:** Buffer Status Report
- **BSSID:** Basic Service Set Identifier
- **CBRS:** Citizens Broadband Radio Service
- **CBSD:** Citizens Broadband Radio Service Device
- **CCA:** Clear Channel Assessment
- **CCE:** Control Channel Elements
- **CMR:** Change Mode Request
- **CN:** Core Network
- **CORESET:** Control Resource Set
- **CS:** Cyclic Shift
- **DL:** Downlink (from BS to UE)
- **DMRS:** Demodulation Reference Signal
- **DN:** Data Network
- **DRB:** Data Radio Bearer
- **DSDS:** Dual SIM Dual Standby
- **DYN:** Dynamic
- **EDCF:** Enhanced Distributed Coordination Function
- **eSNPN:** Equivalent Standalone Non-Public Network
- **FDD:** Frequency Division Duplexing
- **FT:** Frame Type
- **GAA:** General Authorized Access
- **GPRS:** General Packet Radio Service
- **GSCN:** Global Synchronization Channel Number
- **GSM:** Global System for Mobile Communication
- **GTP:** GPRS Tunneling Protocol
- **HPLMN:** Home Public Land Mobile Network
- **IMS:** Internet Protocol Multimedia Subsystem
- **IOT:** Internet of Things
- **IP:** Internet Protocol
- **KPI:** Key Performance Indicator
- **LAN:** Local Area Network
- **LBT:** Listen Before Talk
- **LCP:** Logical Channel Prioritization
- **LQM:** Link Quality Metric
- **LTE:** Long Term Evolution
- **MCC:** Mobile Country Code
- **MIB:** Master Information Block
- **MNO:** Mobile Network Operator
- **MO:** Monitoring Occasion
- **NAS:** Non-Access Stratum
- **NEF:** Network Exposure Function
- **NF:** Network Function
- **NG-RAN:** Next Generation Radio Access Network
- **NID:** Network Identifier
- **NMF:** Network Identifier Management Function
- **NPN:** Non-Public (cellular) Network
- **NRF:** Network Repository Function
- **NSI:** Network Slice Instance
- **NSSAI:** Network Slice Selection Assistance Information
- **OFDM:** Orthogonal Frequency Division Multiplexing
- **OOC:** Out Of Coverage
- **PBCH:** Physical Broadcast Channel
- **PCF:** Point Coordination Function
- **PDB:** Packet Delay Budget
- **PDCP:** Packet Data Convergence Protocol
- **PDN:** Packet Data Network
- **PDU:** Protocol Data Unit
- **PGW:** PDN Gateway
- **PLMN:** Public Land Mobile Network
- **PRACH:** Physical Random Access Channel
- **PRB:** Physical Resource Block
- **PRI:** Physical Uplink Control Channel (PUCCH) Resource Indicator
- **PSCCH:** Physical Sidelink Control Channel
- **PSFCH:** Physical Sidelink Feedback Channel
- **PSSCH:** Physical Sidelink Shared Channel
- **PSD:** Power Spectral Density
- **PSS:** Primary Synchronization Signal
- **PT:** Payload Type
- **PTRS:** Phase Tracking Reference Signal
- **PUCCH:** Physical Uplink Control Channel
- **QBSS:** Quality of Service Enhanced Basic Service Set
- **QFI:** Quality of Service Flow Identifier
- **QI:** Quality Indicator
- **QoE:** Quality of Experience
- **QoS:** Quality of Service
- **RA:** Registration Accept
- **RAN:** Radio Access Network
- **RAR:** Random Access Response
- **RAT:** Radio Access Technology
- **RF:** Radio Frequency
- **ROHC:** Robust Header Compression
- **RR:** Registration Request
- **RRC:** Radio Resource Control
- **RSRP:** Reference Signal Receive Power
- **RTP:** Real-time Transport Protocol
- **RX:** Reception/Receive
- **SAS:** Spectrum Allocation Server
- **SD:** Slice Descriptor
- **SDAP:** Service Data Adaptation Protocol
- **SDU:** Service Data Unit
- **SI:** System Information
- **SIB:** System Information Block
- **SID:** System Identification Number
- **SIM:** Subscriber Identity Module
- **SGW:** Serving Gateway
- **SMF:** Session Management Function
- **SNPN:** Standalone Non-Public Network
- **SPS:** Semi-Persistent Scheduling
- **SSB:** Synchronization Signal Block
- **SSS:** Secondary Synchronization Signal
- **SUPI:** Subscription Permanent Identifier
- **TBS:** Transport Block Size
- **TCP:** Transmission Control Protocol
- **TDD:** Time Division Duplexing
- **TDRA:** Time Domain Resource Allocation
- **TPC:** Transmit Power Control
- **TSC:** Time Sensitive Communication
- **TSCAI:** Time Sensitive Communication Assistance Information
- **TX:** Transmission/Transmit
- **UAC:** Unified Access Control
- **UDM:** Unified Data Management
- **UDR:** User Data Repository
- **UE:** User Equipment
- **UI:** User Input
- **UL:** Uplink (from UE to BS)
- **UMTS:** Universal Mobile Telecommunication System
- **UPF:** User Plane Function
- **URLLC:** Ultra-Reliable Low Latency Communication
- **URM:** Universal Resources Management
- **URSP:** UE Route Selection Policy
- **USIM:** User Subscriber Identity Module
- **Wi-Fi:** Wireless Local Area Network (WLAN) RAT based on the Institute of Electrical and Electronics Engineers' (IEEE) 802.11 standards
- **WLAN:** Wireless LAN
- **XR:** Extended Reality

### Terms

The following is a glossary of terms that may appear in the present application:

**Memory Medium** - Any of various types of memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, processor internal memory, etc.; a non-volatile memory such as a Flash, magnetic media, e.g., a hard drive, or optical storage; registers, or other similar types of memory elements, etc. The memory medium may comprise other types of memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer system for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Programmable Hardware Element** - Includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic".

**Computer System (or Computer)** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" may be broadly defined to encompass any device (or combination of devices) having at least one processor that executes instructions from a memory medium.

**User Equipment (UE) (or "UE Device")** - any of various types of computer systems devices which perform wireless communications. Also referred to as wireless communication devices, many of which may be mobile and/or portable. Examples of UE devices include mobile telephones or smart phones (e.g., iPhone^{™}, Android^{™}-based phones) and tablet computers such as iPad^{™}, Samsung Galaxy^{™}, etc., gaming devices (e.g. Sony PlayStation^{™}, Microsoft XBox^{™}, etc.), portable gaming devices (e.g., Nintendo DS^{™}, PlayStation Portable^{™}, Gameboy Advance^{™}, iPod^{™}), laptops, wearable devices (e.g. Apple Watch^{™}, Google Glass^{™}), PDAs, wearable glasses, head-mounted displays, XR devices, portable Internet devices, music players, data storage devices, or other handheld devices, unmanned aerial vehicles (e.g., drones) and unmanned aerial controllers, etc. Various other types of devices would fall into this category if they include Wi-Fi or both cellular and Wi-Fi communication capabilities and/or other wireless communication capabilities, for example over short-range radio access technologies (SRATs) such as BLUETOOTH^{™}, etc. In general, the term "UE" or "UE device" may be broadly defined to encompass any electronic, computing, and/or telecommunications device (or combination of devices) which is capable of wireless communication and may also be portable/mobile.

**Wireless Device (or wireless communication device)** - any of various types of computer systems devices which performs wireless communications using WLAN communications, SRAT communications, Wi-Fi communications and the like. As used herein, the term "wireless device" may refer to a UE device, as defined above, or to a stationary device, such as a stationary wireless client or a wireless base station. For example a wireless device may be any type of wireless station of an 802.11 system, such as an access point (AP) or a client station (UE), or any type of wireless station of a cellular communication system communicating according to a cellular radio access technology (e.g. 5G NR, LTE, CDMA, GSM), such as a base station or a cellular telephone, for example.

**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.

**Base Station (BS)** - The term "Base Station" has the full breadth of its ordinary meaning, and at least includes a wireless communication station installed at a fixed location and used to communicate as part of a wireless telephone system or radio system.

**Processor** - refers to various elements (e.g. circuits) or combinations of elements that are capable of performing a function in a device, e.g. in a user equipment device or in a cellular network device. Processors may include, for example: general purpose processors and associated memory, portions or circuits of individual processor cores, entire processor cores or processing circuit cores, processing circuit arrays or processor arrays, circuits such as ASICs (Application Specific Integrated Circuits), programmable hardware elements such as a field programmable gate array (FPGA), as well as any of various combinations of the above.

**Channel** - a medium used to convey information from a sender (transmitter) to a receiver. It should be noted that since characteristics of the term "channel" may differ according to different wireless protocols, the term "channel" as used herein may be considered as being used in a manner that is consistent with the standard of the type of device with reference to which the term is used. In some standards, channel widths may be variable (e.g., depending on device capability, band conditions, etc.). For example, LTE may support scalable channel bandwidths from 1.4 MHz to 20MHz. In contrast, WLAN channels may be 22MHz wide while Bluetooth channels may be 1 Mhz wide. Other protocols and standards may include different definitions of channels. Furthermore, some standards may define and use multiple types of channels, e.g., different channels for uplink or downlink and/or different channels for different uses such as data, control information, etc.

**Band (or Frequency Band)** - The term "band" has the full breadth of its ordinary meaning, and at least includes a section of spectrum (e.g., radio frequency spectrum) in which channels are used or set aside for the same purpose. Furthermore, "frequency band" is used to denote any interval in the frequency domain, delimited by a lower frequency and an upper frequency. The term may refer to a radio band or an interval of some other spectrum. A radio communications signal may occupy a range of frequencies over which (or where) the signal is carried. Such a frequency range is also referred to as the bandwidth of the signal. Thus, bandwidth refers to the difference between the upper frequency and lower frequency in a continuous band of frequencies. A frequency band may represent one communication channel or it may be subdivided into multiple communication channels. Allocation of radio frequency ranges to different uses is a major function of radio spectrum allocation. For example, in 5G NR, the operating frequency bands are categorized in two groups. More specifically, per 3GPP Release 15, frequency bands are designated for different frequency ranges (FR) and are defined as FR1 and FR2, with FR1 encompassing the 410 MHz - 7125 MHz range and FR2 encompassing the 24250 MHz - 52600 MHz range.

**Wi-Fi** - The term "Wi-Fi" has the full breadth of its ordinary meaning, and at least includes a wireless communication network or RAT that is serviced by wireless LAN (WLAN) access points and which provides connectivity through these access points to the Internet. Most modern Wi-Fi networks (or WLAN networks) are based on IEEE 802.11 standards and are marketed under the name "Wi-Fi". A Wi-Fi (WLAN) network is different from a cellular network.

**Automatically** - refers to an action or operation performed by a computer system (e.g., software executed by the computer system) or device (e.g., circuitry, programmable hardware elements, ASICs, etc.), without user input directly specifying or performing the action or operation. Thus the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Approximately** - refers to a value that is almost correct or exact. For example, approximately may refer to a value that is within 1 to 10 percent of the exact (or desired) value. It should be noted, however, that the actual threshold value (or tolerance) may be application dependent. For example, in some embodiments, "approximately" may mean within 0.1% of some specified or desired value, while in various other embodiments, the threshold may be, for example, 2%, 3%, 5%, and so forth, as desired or as required by the particular application.

**Concurrent** - refers to parallel execution or performance, where tasks, processes, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

**Station (STA)** - The term "station" herein refers to any device that has the capability of communicating wirelessly, e.g. by using the 802.11 protocol. A station may be a laptop, a desktop PC, PDA, access point or Wi-Fi phone or any type of device similar to a UE. An STA may be fixed, mobile, portable or wearable. Generally in wireless networking terminology, a station (STA) broadly encompasses any device with wireless communication capabilities, and the terms station (STA), wireless client (UE) and node (BS) are therefore often used interchangeably.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

**Transmission Scheduling** - Refers to the scheduling of transmissions, such as wireless transmissions. In some implementations of cellular radio communications, signal and data transmissions may be organized according to designated time units of specific duration during which transmissions take place. As used herein, the term "slot" has the full extent of its ordinary meaning, and at least refers to a smallest (or minimum) scheduling time unit in wireless communications. For example, in 3GPP LTE, transmissions are divided into radio frames, each radio frame being of equal (time) duration (e.g. 10ms). A radio frame in 3GPP LTE may be further divided into a specified number of (e.g. ten) subframes, each subframe being of equal time duration, with the subframes designated as the smallest (minimum) scheduling unit, or the designated time unit for a transmission. Thus, in a 3GPP LTE example, a "subframe" may be considered an example of a "slot" as defined above. Similarly, a smallest (or minimum) scheduling time unit for 5G NR (or NR, for short) transmissions is referred to as a "slot". In different communication protocols the smallest (or minimum) scheduling time unit may also be named differently.

**Resources** - The term "resource" has the full extent of its ordinary meaning and may refer to frequency resources and time resources used during wireless communications. As used herein, a resource element (RE) refers to a specific amount or quantity of a resource. For example, in the context of a time resource, a resource element may be a time period of specific length. In the context of a frequency resource, a resource element may be a specific frequency bandwidth, or a specific amount of frequency bandwidth, which may be centered on a specific frequency. As one specific example, a resource element may refer to a resource unit of 1 symbol (in reference to a time resource, e.g. a time period of specific length) per 1 subcarrier (in reference to a frequency resource, e.g. a specific frequency bandwidth, which may be centered on a specific frequency). A resource element group (REG) has the full extent of its ordinary meaning and at least refers to a specified number of consecutive resource elements. In some implementations, a resource element group may not include resource elements reserved for reference signals. A control channel element (CCE) refers to a group of a specified number of consecutive REGs. A resource block (RB) refers to a specified number of resource elements made up of a specified number of subcarriers per specified number of symbols. Each RB may include a specified number of subcarriers. A resource block group (RBG) refers to a unit including multiple RBs. The number of RBs within one RBG may differ depending on the system bandwidth.

**Bandwidth Part (BWP)** - A bandwidth part (BWP) is a contiguous set of physical resource blocks selected from a contiguous subset of the common resource blocks for a given numerology on a given carrier. For downlink, a UE may be configured with up to a specified number of carrier BWPs (e.g. four BWPs, per some specifications), with one BWP per carrier active at a given time (per some specifications). For uplink, the UE may similarly be configured with up to several (e.g. four) carrier BWPs, with one BWP per carrier active at a given time (per some specifications). If a UE is configured with a supplementary uplink, then the UE may be additionally configured with up to the specified number (e.g. four) carrier BWPs in the supplementary uplink, with one carrier BWP active at a given time (per some specifications).

**Multi-cell Arrangements** - A Master node is defined as a node (radio access node) that provides control plane connection to the core network in case of multi radio dual connectivity (MR-DC). A master node may be a master eNB (3GPP LTE) or a master gNB (3GPP NR), for example. A secondary node is defined as a radio access node with no control plane connection to the core network, providing additional resources to the UE in case of MR-DC. A Master Cell group (MCG) is defined as a group of serving cells associated with the Master Node, including the primary cell (PCell) and optionally one or more secondary cells (SCell). A Secondary Cell group (SCG) is defined as a group of serving cells associated with the Secondary Node, including a special cell, namely a primary cell of the SCG (PSCell), and optionally including one or more SCells. A UE may typically apply radio link monitoring to the PCell. If the UE is configured with an SCG then the UE may also apply radio link monitoring to the PSCell. Radio link monitoring is generally applied to the active BWPs and the UE is not required to monitor inactive BWPs. The PCell is used to initiate initial access, and the UE may communicate with the PCell and the SCell via Carrier Aggregation (CA). Currently Amended capability means a UE may receive and/or transmit to and/or from multiple cells. The UE initially connects to the PCell, and one or more SCells may be configured for the UE once the UE is in a connected state.

**Core Network (CN)** - Core network (or backbone) is defined as a part of a 3GPP system which is independent of the connection technology (e.g. the Radio Access Technology, RAT) of the UEs. The UEs may connect to the core network via a radio access network, RAN, which may be RAT-specific. Oftentimes a CN may be a part of a computer network which interconnects networks, providing a path for the exchange of information between different Local Area Networks (LANs) or subnetworks. A CN may also tie together diverse networks in the same building, in different buildings in a campus environment, or over wide areas. Normally, the CN's capacity is greater than the networks connected to it.

**Ultra-Reliable Low Latency Communication (URLLC)** - URLLC refers to the use of a network for mission critical (or essential) applications that require uninterrupted and robust data exchange.

**Time Sensitive Communication (TSC)** - In comparison to URLLC, TSC has stricter requirements in terms of latency and reliability, and may at times require absolute time-synchronization and on-time delivery of packets for deterministic and isochronous real-time applications. The success of TSC depends on effective scheduling of TSC traffic flows.

**Extended Reality (eXtended Reality, XR)** - XR is an umbrella term that encompasses Virtual Reality (VR), Augmented Reality (AR), and Mixed Reality (MR), and represents one of the most important media applications under consideration for establishing ways in which people interact with media.

**Service Data Unit (SDU)** - An SDU is a unit of data that has been passed down from an Open Systems Interconnection layer or sublayer to a lower layer. An SDU has not yet been encapsulated into a protocol data unit (PDU) by the lower layer.

**Service Data Adaptation Protocol (SDAP)** - The SDAP is responsible for QoS flow handling across the on-air (e.g. NR air) interface. In particular, the SDAP maps a specific QoS flow to a corresponding Data Radio Bearer (DRB) which has been established with the appropriate level of QoS. In NR sidelink communications, the SDAP sublayer maps PC5 (i.e. sidelink, SL) quality of service (QoS) flows to SL data radio bearers (SL-DRBs).

**NR Channel Hierarchy** - In order to group the data to be sent over the NR radio access network, the data is organized in a specific way. As there are many different functions associated with data transmitted over the radio communications link, they need to be clearly marked and have defined positions and formats. Accordingly, several different forms of data channels are defined and used. The higher level channels are mapped to or contained within other channels until the physical level is reached. A physical channel contains all the data from higher level channels. This provides a logical and manageable flow of data from the higher levels of the protocol stack down to the physical layer. Three main types of data channels are used within mobile communications systems, e.g. in NR communication systems.

**Logical Channel (LCH)** - Logical channels may belong into one of two groups: control channels and traffic channels. Control channels are used for the transfer of data from the control plane while Traffic channels are used for the transfer of user plane data.

**Transport Channel (TCH)** - The Transport channel represents the multiplexing of the logical data to be transported by the physical layer and its channels over the radio interface.

**Physical Channel (PCH)** - The physical channels are closest to the actual transmission of the data over the radio access network/NR radio frequency signal and are used to carry the data over the radio interface. Higher level channels are often mapped to Physical channels to provide a specific service. The Physical channels carry payload data or details of specific data transmission characteristics like modulation, reference signal multiplexing, transmit power, RF resources, etc.

**Network exposure function (NEF)** - The NEF is a function in the 3GPP core network architecture that provides a means to securely expose capabilities and events. The NEF stores the received information as structured data and exposes it to other network functions.

**Point coordination function (PCF)** - The PCF is a media access control (MAC) technique used to coordinate communications within a communication network.

**User Plane Function (UPF)** - The UPF is one of the network functions (NFs) of the 5G/NR core network and is responsible for packet routing and forwarding, packet inspection, QoS handling, and external PDU session for interconnecting Data Network (DN), in the NR architecture.

**Media Access Control (MAC) Control Element (MAC CE)** - In at least LTE and NR communications, several communication paths exist at the MAC layer, with a specified MAC structure carrying special control information. The specified MAC structure carrying the control information is referred to as a "MAC CE". The MAC CE operates between UE (MAC) and base station (MAC) for fast signaling communication exchange that does not involve upper layers. A MAC CE is sent as a part of MAC PDU. For NR uplink communications, MAC CEs are typically placed at the end of the MAC PDU. For NR downlink communications, MAC CEs are typically placed at the beginning of the MAC PDU.

**Camping on a Cell (or Network)** - In at least LTE and NR communications, a device or UE searching for a suitable cell of a selected mobile network, selecting that cell to provide available services, and monitoring its control channel is referred to as the UE "camping on the cell". The UE registers its presence in the registration area of the chosen cell if necessary, by means of a location registration procedure. If the UE finds a more suitable cell, it may reselect onto that more suitable cell and camp on that cell. If the new cell is in a different registration area, location registration is also performed. The UE may camp on a cell in idle mode, meaning that the UE may not be conducting active communications with other UEs but may monitor certain control channels and may periodically check for paging messages or for other communications on the cell, thereby remaining (camped) on the cell. A UE camped on a cell can receive system information from the mobile network. A UE camped on a cell may initiate a call (when registered on the cell) by initially accessing the network on the control channel of the cell on which it is camped. If the mobile network receives a call for the registered UE, the network will have access to the registration area of the cell in which the UE is camped, and can send a "paging" message for the UE on control channels of all the cells in the registration area. The UE can receive the paging message because it is tuned to the control channel of the cell on which the UE is camped, and the UE can respond on that control channel. Camping on the cell also means that the UE can receive cell broadcast messages.

**Barring a Cell (or Network)** - In at least LTE and NR communications, a cell (or network) is said to be barred when a UE is not allowed to camp/remain on that cell. According to 3GPP TS 25.304, a "Barred Cell" is "a cell a UE is not allowed to camp on." A UE is not allowed to camp on a barred cell, not even for emergency calls. If a cell on which a UE is currently camped becomes barred, a cell reselection is triggered.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112, paragraph six, interpretation for that component.

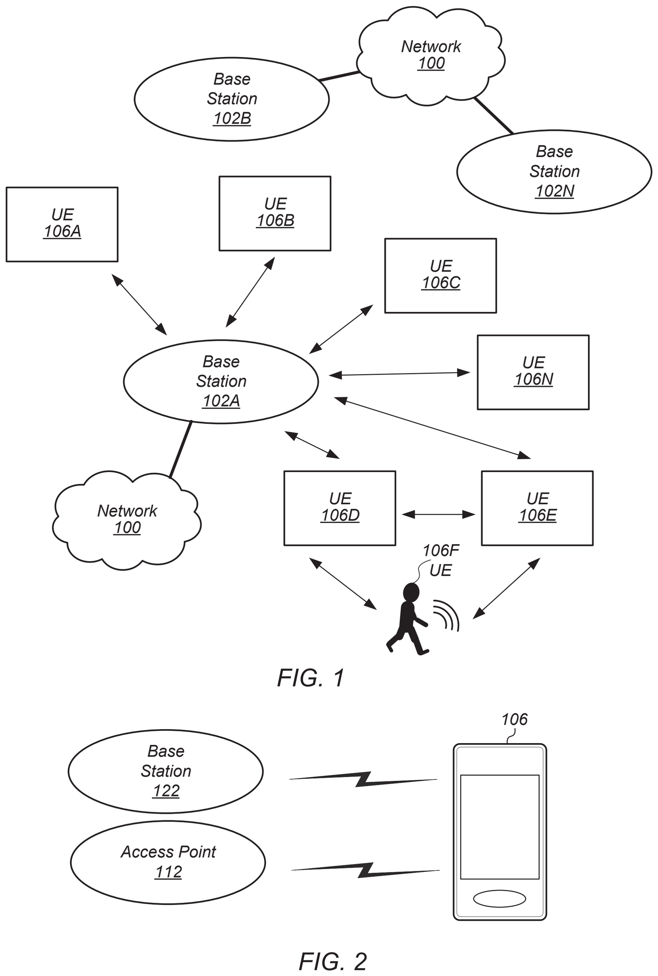

### Figures 1 and 2 - Exemplary Communication Systems

Figure 1 illustrates an exemplary (and simplified) wireless communication system, according to some embodiments. It is noted that the system of Figure 1 is merely one example of a possible system, and embodiments may be implemented in any of various systems, as desired.

As shown, the exemplary wireless communication system includes base stations 102A through 102N, also collectively referred to as base station(s) 102 or base station 102. As shown in Figure 1, base station 102A communicates over a transmission medium with one or more user devices 106A through 106N. Each of the user devices may be referred to herein as a "user equipment" (UE) or UE device. Thus, the user devices 106A through 106N are referred to as UEs or UE devices, and are also collectively referred to as UE(s) 106 or UE 106.

The base station 102A may be a base transceiver station (BTS) or cell site, and may include hardware that enables wireless communication with the UEs 106A through 106N. The base station 102A may also be equipped to communicate with a network 100 (e.g., a core network of a cellular service provider, a telecommunication network such as a public switched telephone network (PSTN), and/or the Internet, neutral host or various CBRS (Citizens Broadband Radio Service) deployments, among various possibilities). Thus, the base station 102A may facilitate communication between the user devices 106 and/or between the user devices 106 and the network 100. In particular, the cellular base station 102A may provide UEs 106 with various telecommunication capabilities, such as voice, short message service (SMS) and/or data services. The communication area (or coverage area) of the base station 106 may be referred to as a "cell." It is noted that "cell" may also refer to a logical identity for a given wireless communication coverage area at a given frequency. In general, any independent cellular wireless coverage area may be referred to as a "cell". In such cases a base station may be situated at particular confluences of three cells. The base station, in this uniform topology, may serve three 120 degree beam width areas referenced as cells. Also, in case of carrier aggregation, small cells, relays, etc. may each represent a cell. Thus, in carrier aggregation in particular, there may be primary cells and secondary cells which may service at least partially overlapping coverage areas but on different respective frequencies. For example, a base station may serve any number of cells, and cells served by a base station may or may not be collocated (e.g. remote radio heads). As also used herein, from the perspective of UEs, a base station may sometimes be considered as representing the network insofar as uplink and downlink communications of the UE are concerned. Thus, a UE communicating with one or more base stations in the network may also be interpreted as the UE communicating with the network, and may further also be considered at least a part of the UE communicating on the network or over the network.

The base station(s) 102 and the user devices 106 may be configured to communicate over the transmission medium using any of various radio access technologies (RATs), also referred to as wireless communication technologies, or telecommunication standards, such as GSM, UMTS (WCDMA), LTE, LTE-Advanced (LTE-A), LAA/LTE-U, 5G-NR (NR, for short), 3GPP2 CDMA2000 (e.g., 1xRTT, 1xEV-DO, HRPD, eHRPD), Wi-Fi, WiMAX etc. Note that if the base station 102A is implemented in the context of LTE, it may alternately be referred to as an 'eNodeB' or 'eNB'. Similarly, if the base station 102A is implemented in the context of 5G NR, it may alternately be referred to as 'gNodeB' or 'gNB'. Depending on a given application or specific considerations, for convenience some of the various different RATs may be functionally grouped according to an overall defining characteristic. For example, all cellular RATs may be collectively considered as representative of a first (form/type of) RAT, while Wi-Fi communications may be considered as representative of a second RAT. In other cases, individual cellular RATs may be considered individually as different RATs. For example, when differentiating between cellular communications and Wi-Fi communications, "first RAT" may collectively refer to all cellular RATs under consideration, while "second RAT" may refer to Wi-Fi. Similarly, when applicable, different forms of Wi-Fi communications (e.g. over 2.4 GHz vs. over 5 GHz) may be considered as corresponding to different RATs. Furthermore, cellular communications performed according to a given RAT (e.g. LTE or NR) may be differentiated from each other on the basis of the frequency spectrum in which those communications are conducted. For example, LTE or NR communications may be performed over a primary licensed spectrum as well as over a secondary spectrum such as an unlicensed spectrum and/or spectrum that was assigned to private networks. Overall, the use of various terms and expressions will always be clearly indicated with respect to and within the context of the various applications/embodiments under consideration.

As shown, the base station 102A may also be equipped to communicate with a network 100 (e.g., a core network of a cellular service provider, a telecommunication network such as a public switched telephone network (PSTN), and/or the Internet, among various possibilities). Thus, the base station 102A may facilitate communication between the user devices 106 and/or between the user devices 106 and the network 100. In particular, the cellular base station 102A may provide UEs 106 with various telecommunication capabilities, such as voice, SMS and/or data services. UE 106 may be capable of communicating using multiple wireless communication standards. For example, a UE 106 might be configured to communicate using any or all of a 3GPP cellular communication standard (such as LTE or NR) or a 3GPP2 cellular communication standard (such as a cellular communication standard in the CDMA2000 family of cellular communication standards). Base station 102A and other similar base stations (such as base stations 102B...102N) operating according to the same or a different cellular communication standard may thus be provided as one or more networks of cells, which may provide continuous or nearly continuous overlapping service to UE 106 and similar devices over a wide geographic area via one or more cellular communication standards.

Thus, while base station 102A may act as a "serving cell" for UEs 106A-106N as illustrated in Figure 1, each one of UE(s) 106 may also be capable of receiving signals from (and may possibly be within communication range of) one or more other cells (possibly provided by base stations 102B-102N and/or any other base stations), which may be referred to as "neighboring cells". Such cells may also be capable of facilitating communication in-between user devices 106 and/or between user devices 106 and the network 100. Such cells may include "macro" cells, "micro" cells, "pico" cells, and/or cells which provide any of various other granularities of service area size. For example, base stations 102A-102B illustrated in Figure 1 may be macro cells, while base station 102N may be a micro cell. Other configurations are also possible.

In some embodiments, base station 102A may be a next generation base station, e.g., a 5G New Radio (5G NR) base station, or "gNB". In some embodiments, a gNB may be connected to a legacy evolved packet core (EPC) network and/or to a NR core (NRC) network. In addition, a gNB cell may include one or more transmission and reception points (TRPs). In addition, a UE capable of operating according to 5G NR may be connected to one or more TRPs within one or more gNBs.

The UE 106 might also or alternatively be configured to communicate using WLAN, BLUETOOTH^{™}, BLUETOOTH^{™} Low-Energy, one or more global navigational satellite systems (GNSS, e.g., GPS or GLONASS), one and/or more mobile television broadcasting standards (e.g., ATSC-M/H or DVB-H), etc. Other combinations of wireless communication standards (including more than two wireless communication standards) are also possible. Furthermore, the UE 106 may also communicate with Network 100, through one or more base stations or through other devices, stations, or any appliances not explicitly shown but considered to be part of Network 100. UE 106 communicating with a network may therefore be interpreted as the UE(s) 106 communicating with one or more network nodes considered to be a part of the network and which may interact with the UE(s) 106 to conduct communications with the UE(s) 106 and in some cases affect at least some of the communication parameters and/or use of communication resources of the UE(s) 106.

As also illustrated in Figure 1, at least some of the UEs, e.g. UEs 106D and 106E may represent vehicles communicating with each other and with base station 102, e.g. via cellular communications such as 3GPP LTE and/or 5G-NR communications, for example. In addition, UE 106F may represent a pedestrian who is communicating and/or interacting in a similar manner with the vehicles represented by UEs 106D and 106E. Various embodiments of vehicles communicating in a network exemplified in Figure 1 are disclosed, for example, in the context of vehicle-to-everything (V2X) communications such as the communications specified by certain versions of the 3GPP standard, among others.

Figure 2 illustrates an exemplary user equipment 106 (e.g., one of UEs 106A through 106N) in communication with the base station 122 and an access point 112, according to some embodiments. The UE 106 may be a device with both cellular communication capability and non-cellular communication capability (e.g., BLUETOOTH^{™}, Wi-Fi, and so forth) such as a mobile phone, a hand-held device, a computer or a tablet, or virtually any type of wireless device. The UE 106 may include a processor that is configured to execute program instructions stored in memory. The UE 106 may perform any of the method embodiments described herein by executing such stored instructions. Alternatively, or in addition, the UE 106 may include a programmable hardware element such as an FPGA (field-programmable gate array) that is configured to perform any of the method embodiments described herein, or any portion of any of the method embodiments described herein. The UE 106 may be configured to communicate using any of multiple wireless communication protocols. For example, the UE 106 may be configured to communicate using two or more of CDMA2000, LTE, LTE-A, NR, WLAN, or GNSS. Other combinations of wireless communication standards are also possible.

The UE 106 may include one or more antennas for communicating using one or more wireless communication protocols according to one or more RAT standards, e.g. those previously mentioned above. In some embodiments, the UE 106 may share one or more parts of a receive chain and/or transmit chain between multiple wireless communication standards. The shared radio may include a single antenna, or may include multiple antennas (e.g., for MIMO) for performing wireless communications. Alternatively, the UE 106 may include separate transmit and/or receive chains (e.g., including separate antennas and other radio components) for each wireless communication protocol with which it is configured to communicate. As another alternative, the UE 106 may include one or more radios or radio circuitry which are shared between multiple wireless communication protocols, and one or more radios which are used exclusively by a single wireless communication protocol. For example, the UE 106 may include radio circuitries for communicating using either of LTE or CDMA2000 1xRTT or NR, and separate radios for communicating using each of Wi-Fi and BLUETOOTH^{™}. Other configurations are also possible.

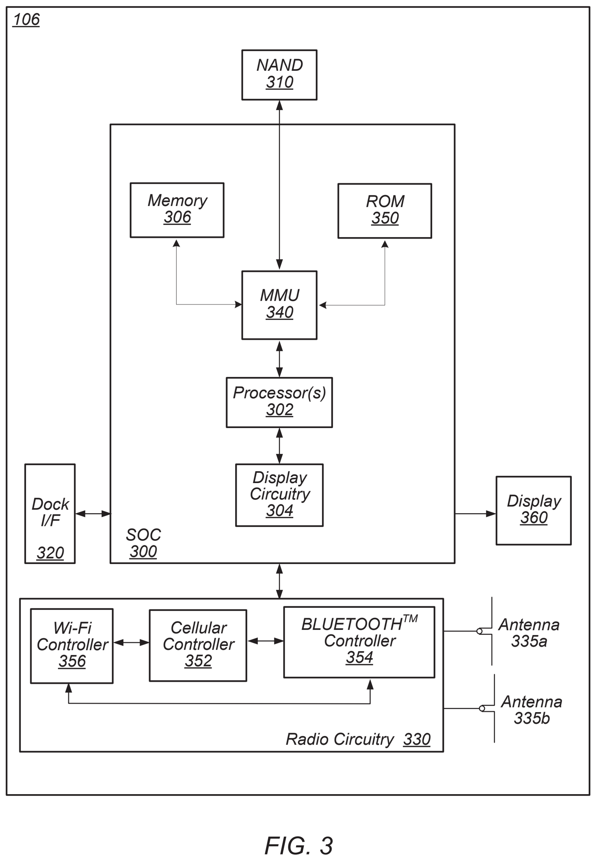

### Figure 3 -Block Diagram of an Exemplary UE

Figure 3 illustrates a block diagram of an exemplary UE 106, according to some embodiments. As shown, the UE 106 may include a system on chip (SOC) 300, which may include various elements/components for various purposes. For example, as shown, the SOC 300 may include processor(s) 302 which may execute program instructions for the UE 106 and display circuitry 304 which may perform graphics processing and provide display signals to the display 360. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, radio circuitry 330, connector I/F 320, and/or display 360. The MMU 340 may be configured to perform memory protection and page table translation or set up. In some embodiments, the MMU 340 may be included as a portion of the processor(s) 302.

As shown, the SOC 300 may be coupled to various other circuits of the UE 106. For example, the UE 106 may include various types of memory (e.g., including NAND flash 310), a connector interface 320 (e.g., for coupling to the computer system), the display 360, and wireless communication circuitry (e.g., for LTE, LTE-A, NR, CDMA2000, BLUETOOTH^{™}, Wi-Fi, GPS, etc.). The UE device 106 may include at least one antenna (e.g. 335a), and possibly multiple antennas (e.g. illustrated by antennas 335a and 335b), for performing wireless communication with base stations and/or other devices. Antennas 335a and 335b are shown by way of example, and UE device 106 may include fewer or more antennas. Overall, the one or more antennas are collectively referred to as antenna(s) 335. For example, the UE device 106 may use antenna(s) 335 to perform the wireless communication with the aid of radio circuitry 330. As noted above, the UE may be configured to communicate wirelessly using multiple wireless communication standards in some embodiments.

The processor(s) 302 of the UE device 106 may be configured to implement part or all of the methods described herein, e.g., by executing program instructions stored on a memory medium (e.g., a non-transitory computer-readable memory medium). In other embodiments, processor(s) 302 may be configured as a programmable hardware element, such as an FPGA (Field Programmable Gate Array), or as an ASIC (Application Specific Integrated Circuit). Furthermore, processor(s) 302 may be coupled to and/or may interoperate with other components as shown in Figure 3, to implement communications by UE 106 according to various embodiments disclosed herein. Specifically, processor(s) 302 may be coupled to and/or may interoperate with other components as shown in Figure 3 to facilitate UE 106 communicating in a manner that seeks to optimize RAT selection. Processor(s) 302 may also implement various other applications and/or end-user applications running on UE 106.

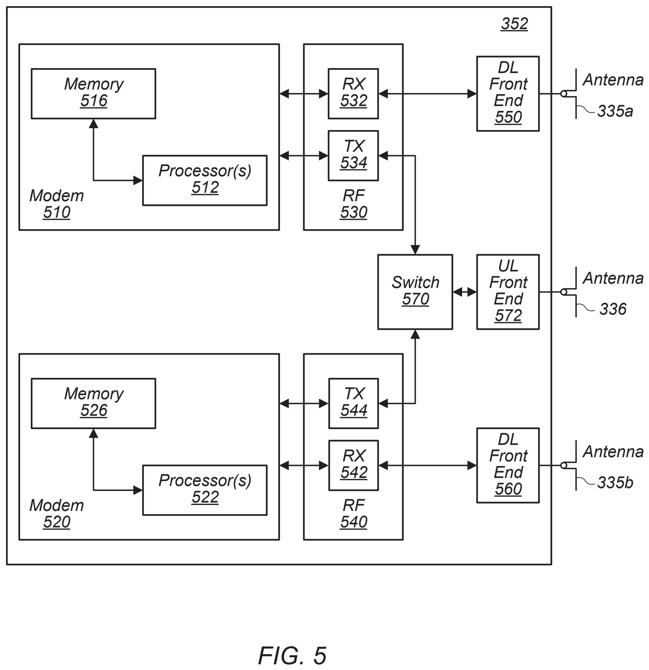

In some embodiments, radio circuitry 330 may include separate controllers dedicated to controlling communications for various respective RATs and/or RAT standards. For example, as shown in Figure 3, radio circuitry 330 may include a Wi-Fi controller 356, a cellular controller (e.g. LTE and/or NR controller) 352, and BLUETOOTH^{™} controller 354, and according to at least some embodiments, one or more or all of these controllers may be implemented as respective integrated circuits (ICs or chips, for short) in communication with each other and with SOC 300 (e.g. with processor(s) 302). For example, Wi-Fi controller 356 may communicate with cellular controller 352 over a cell-ISM link or WCI interface, and/or BLUETOOTH^{™} controller 354 may communicate with cellular controller 352 over a cell-ISM link, etc. While three separate controllers are illustrated within radio circuitry 330, other embodiments may have fewer or more similar controllers for various different RATs and/or RAT standards that may be implemented in UE device 106. For example, at least one exemplary block diagram illustrative of some embodiments of cellular controller 352 is shown in Figure 5 and will be further described below.

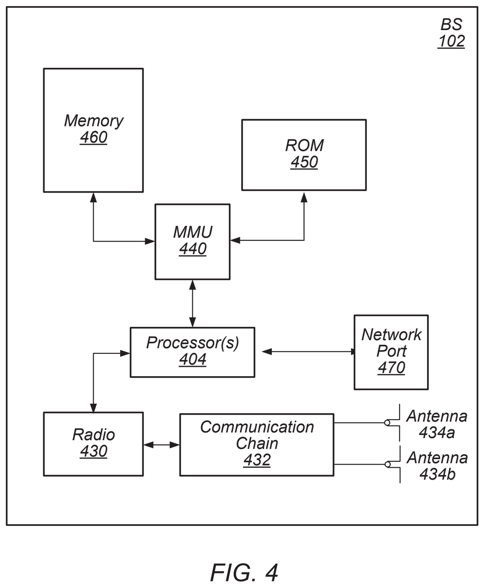

### Figure 4 -Block Diagram of an Exemplary Base Station

Figure 4 illustrates a block diagram of an exemplary base station 102, according to some embodiments. It is noted that the base station of Figure 4 is merely one example of a possible base station. As shown, the base station 102 may include processor(s) 404 which may execute program instructions for the base station 102. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The base station 102 may include at least one network port 470. The network port 470 may be configured to couple to a telephone network and provide a plurality of devices, such as UE devices 106, access to the telephone network as described above in Figures 1 and 2. The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

The base station 102 may include at least one antenna 434a, and possibly multiple antennas (e.g. illustrated by antennas 434a and 434b), for performing wireless communication with mobile devices and/or other devices. Antennas 434a and 434b are shown by way of example, and base station 102 may include fewer or more antennas. Overall, the one or more antennas, which may include antenna 434a and/or antenna 434b, are collectively referred to as antenna 434 or antenna(s) 434. Antenna(s) 434 may be configured to operate as a wireless transceiver and may be further configured to communicate with UE devices 106 via radio circuitry 430. The antenna(s) 434 communicates with the radio 430 via communication chain 432. Communication chain 432 may be a receive chain, a transmit chain or both. The radio circuitry 430 may be designed to communicate via various wireless telecommunication standards, including, but not limited to, LTE, LTE-A, 5G-NR (NR) WCDMA, CDMA2000, etc. The processor(s) 404 of the base station 102 may be configured to implement part or all of the methods described herein, e.g., by executing program instructions stored on a memory medium (e.g., a non-transitory computer-readable memory medium), for base station 102 to communicate with a UE device as disclosed herein. Alternatively, the processor(s) 404 may be configured as a programmable hardware element(s), such as an FPGA (Field Programmable Gate Array), or as an ASIC (Application Specific Integrated Circuit), or a combination thereof. In the case of certain RATs, for example Wi-Fi, base station 102 may be designed as an access point (AP), in which case network port 470 may be implemented to provide access to a wide area network and/or local area network (s), e.g. it may include at least one Ethernet port, and radio 430 may be designed to communicate according to the Wi-Fi standard. Base station 102 may operate according to the various methods as disclosed herein for communicating with mobile devices.

### Figure 5 - Exemplary Cellular Communication Circuitry

Figure 5 illustrates an exemplary simplified block diagram illustrative of cellular controller 352, according to some embodiments. It is noted that the block diagram of the cellular communication circuitry of Figure 5 is only one example of a possible cellular communication circuit; other circuits, such as circuits including or coupled to sufficient antennas for different RATs to perform uplink activities using separate antennas, or circuits including or coupled to fewer antennas, e.g., that may be shared among multiple RATs, are also possible. According to some embodiments, cellular communication circuitry 352 may be included in a communication device, such as communication device 106 described above. As noted above, communication device 106 may be a user equipment (UE) device, a mobile device or mobile station, a wireless device or wireless station, a desktop computer or computing device, a mobile computing device (e.g., a laptop, notebook, or portable computing device), a tablet and/or a combination of devices, among other devices.

The cellular communication circuitry 352 may couple (e.g., communicatively; directly or indirectly) to one or more antennas, such as antennas 335a-b and 336 as shown. In some embodiments, cellular communication circuitry 352 may include dedicated receive chains (including and/or coupled to (e.g., communicatively; directly or indirectly) dedicated processors and/or radios) for multiple RATs (e.g., a first receive chain for LTE and a second receive chain for 5G NR). For example, as shown in Figure 5, cellular communication circuitry 352 may include a first modem 510 and a second modem 520. The first modem 510 may be configured for communications according to a first RAT, e.g., such as LTE or LTE-A, and the second modem 520 may be configured for communications according to a second RAT, e.g., such as 5G NR.

As shown, the first modem 510 may include one or more processors 512 and a memory 516 in communication with processors 512. Modem 510 may be in communication with a radio frequency (RF) front end 530. RF front end 530 may include circuitry for transmitting and receiving radio signals. For example, RF front end 530 may include receive circuitry (RX) 532 and transmit circuitry (TX) 534. In some embodiments, receive circuitry 532 may be in communication with downlink (DL) front end 550, which may include circuitry for receiving radio signals via antenna 335a.

Similarly, the second modem 520 may include one or more processors 522 and a memory 526 in communication with processors 522. Modem 520 may be in communication with an RF front end 540. RF front end 540 may include circuitry for transmitting and receiving radio signals. For example, RF front end 540 may include receive circuitry 542 and transmit circuitry 544. In some embodiments, receive circuitry 542 may be in communication with DL front end 560, which may include circuitry for receiving radio signals via antenna 335b.

In some embodiments, a switch 570 may couple transmit circuitry 534 to uplink (UL) front end 572. In addition, switch 570 may couple transmit circuitry 544 to UL front end 572. UL front end 572 may include circuitry for transmitting radio signals via antenna 336. Thus, when cellular communication circuitry 352 receives instructions to transmit according to the first RAT (e.g., as supported via the first modem 510), switch 570 may be switched to a first state that allows the first modem 510 to transmit signals according to the first RAT (e.g., via a transmit chain that includes transmit circuitry 534 and UL front end 572). Similarly, when cellular communication circuitry 352 receives instructions to transmit according to the second RAT (e.g., as supported via the second modem 520), switch 570 may be switched to a second state that allows the second modem 520 to transmit signals according to the second RAT (e.g., via a transmit chain that includes transmit circuitry 544 and UL front end 572).

As described herein, the first modem 510 and/or the second modem 520 may include hardware and software components for implementing any of the various features and techniques described herein. The processors 512, 522 may be configured to implement part or all of the features described herein, e.g., by executing program instructions stored on a memory medium (e.g., a non-transitory computer-readable memory medium). Alternatively (or in addition), processors 512, 522 may be configured as a programmable hardware element, such as an FPGA (Field Programmable Gate Array), or as an ASIC (Application Specific Integrated Circuit). Alternatively (or in addition) the processors 512, 522, in conjunction with one or more of the other components 530, 532, 534, 540, 542, 544, 550, 570, 572, 335 and 336 may be configured to implement part or all of the features described herein.

In addition, as described herein, processors 512, 522 may include one or more components. Thus, processors 512, 522 may include one or more integrated circuits (ICs) that are configured to perform the functions of processors 512, 522. In addition, each integrated circuit may include circuitry (e.g., first circuitry, second circuitry, etc.) configured to perform the functions of processors 512, 522.

In some embodiments, the cellular communication circuitry 352 may include only one transmit/receive chain. For example, the cellular communication circuitry 352 may not include the modem 520, the RF front end 540, the DL front end 560, and/or the antenna 335b. As another example, the cellular communication circuitry 352 may not include the modem 510, the RF front end 530, the DL front end 550, and/or the antenna 335a. In some embodiments, the cellular communication circuitry 352 may also not include the switch 570, and the RF front end 530 or the RF front end 540 may be in communication, e.g., directly, with the UL front end 572.

### Reduced Capability (Redcap) Devices

Support for reduced capability NR devices, e.g. devices featuring lower-end capabilities for certain features and parameters, has gained importance at least partially in the context of industrial wireless sensors, video surveillance, and wearable devices. One objective has become to reduce UE bandwidth from 100MHz or greater - mandated in the 3GPP standard (Rel-15/16) for "normal" NR devices (also referred to as legacy devices) - to 20MHz for reduced capability device (referred to as "Redcap" devices.) Accordingly, support has been established for a reduced maximum bandwidth (BW) UE, identifying a maximum bandwidth of 20 MHz during and after initial access. The possibility of, and any associated conditions for, optional support of a wider bandwidth up to 40MHz or even 100MHz are also under consideration.

Release 17 of the 3GPP specification defines various aspects of wireless communications conducted by Redcap devices. One aspect includes specifying access control mechanisms that allow operators to restrict the access of Redcap devices (Redcap UEs) to certain (e.g., selected) cells, if so desired. This includes providing at least a system information indication whether a Redcap UE can camp on the cell/frequency or not, and this indication is expected to be specific to the number of receive (Rx) branches of the UE. As mentioned above, Redcap devices feature a reduced maximum UE bandwidth, with a maximum bandwidth of an FR1 Redcap UE during and after initial access defined to be 20 MHz, and a maximum bandwidth of an FR2 Redcap UE during and after initial access defined to be 100MHz. Redcap devices also feature a reduced minimum number of receive branches. For frequency bands where a legacy NR UE is required to be equipped with a minimum of two (2) Rx antenna ports, the minimum number of Rx branches supported for a Redcap UE according to the 3GPP specification is one (1). The 3GPP specification also supports two (2) Rx branches for a Redcap UE in these bands. For frequency bands where a legacy NR UE (other than 2-Rx vehicular UE) is required to be equipped with a minimum of four (4) Rx antenna ports, the minimum number of Rx branches supported by the 3GPP specification for a Redcap UE is one (1). The 3GPP specification also supports two (2) Rx branches for a Redcap UE in these bands. Accordingly, there is an expectation for a mechanism by which the base station (e.g. gNB) is made aware of the number of Rx branches of the UE.

### Cell Operation for Initial Access

### Figure 6

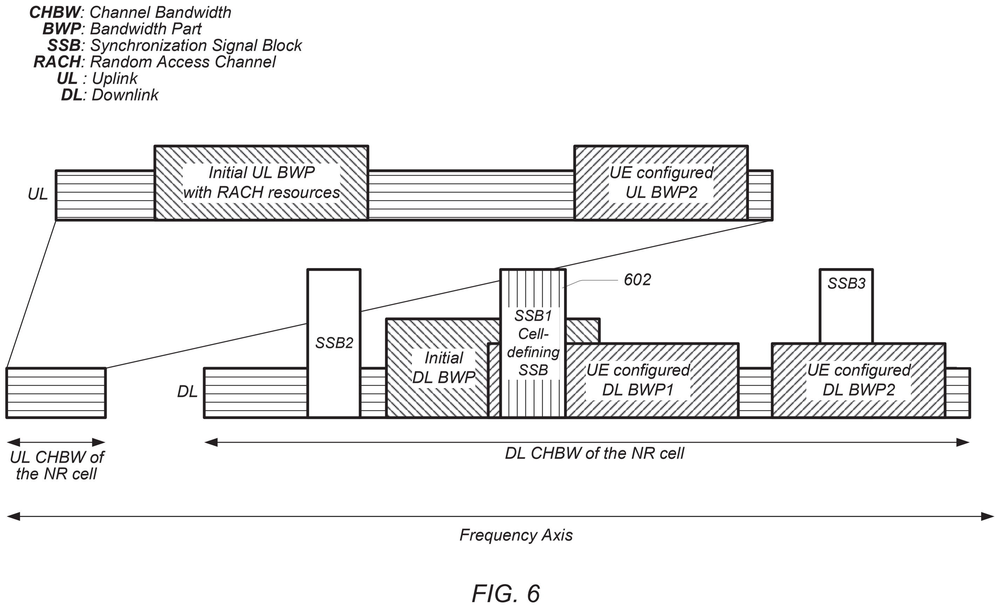

Figure 6 shows a simplified diagram illustrating channel bandwidth (CHBW) and bandwidth part (BWP) configuration for initial access to a cell (e.g. via a base station) by a device, e.g. wireless communication device or user equipment device (UE). As shown in Figure 6, from the perspective of the base station (e.g. a gNB), the CHBW is broadcast by the base station in the system information block (SIB) and is defined per subcarrier spacing (SCS). The UE applies this CHBW as part of initial access to the cell while using the initial BWP. From the perspective of the UE, the cell-defining SSB 602 includes the key reference signal that indicates (or provides) the identity of the cell. More specifically, it is the SIB1 identity indicated by the MIB which is part of the SSB burst (the physical broadcast channels, PBCH, part of the MIB). The base station (e.g. gNB) may transmit more SSBs (e.g. SSB2 and SSB3 illustrated in Figure 6) within the cell, but those SSBs are not considered cell-defining SSBs.

During a cell search, the UE searches or monitors for the SSB. To ease the cell search procedure for the UE, the SSBs are located on (or transmitted according to) a "Global Synchronization Raster Channel", providing a range of frequencies to the UE for initial search. It is also referred to as Global Synchronization Channel Number (GSCN). The GSCN may be viewed as an integral division of the available spectrum or available overall frequency bandwidth such that the SSBs intended as cell-defining SSBs are only located on a GSCN.

### Figure 7

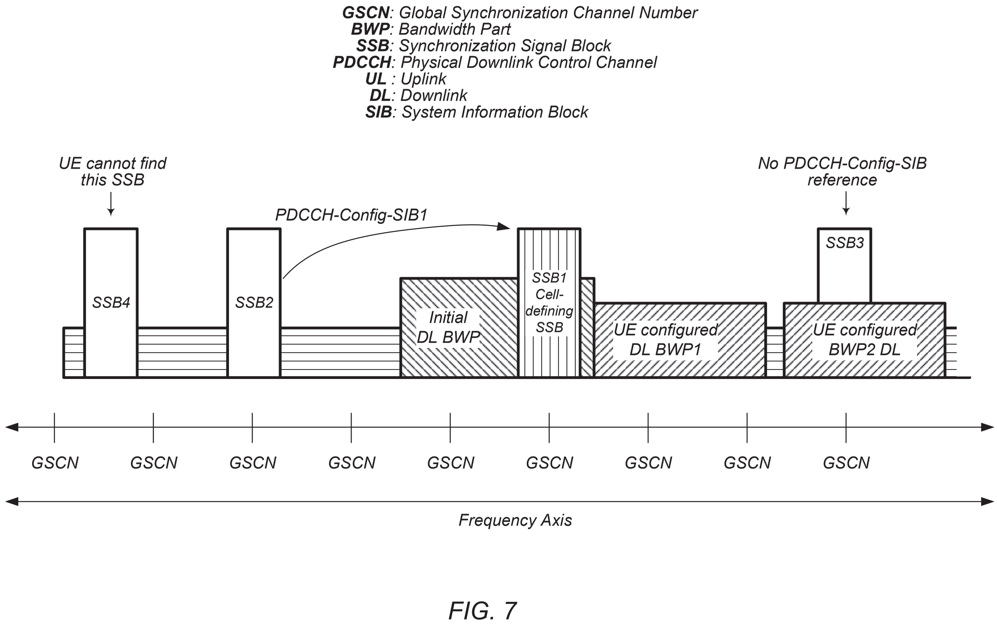

Figure 7 shows a simplified diagram illustrating SSB transmissions and CHBW and BWP configuration using a GSCN. SSBs may also be transmitted outside of the GSCN (e.g., SSB4 in Figure 7) but those SSBs are not intended to be detected by the UE during a cell search. As illustrated in Figure 7, SSB2, SSB1, and SSB3 are all located on a GSCN. The network (or cell, e.g., via a base station/gNB) is free to configure such SSBs with no restriction on the network regarding where in the spectrum the SSBs may be located. Some SSBs may have an MIB which does not point to the SIB1 location. When this occurs, the base station (gNB) may (optionally) provide the location of the SSB where a valid SIB1 in the associated MIB may be found. Such information is present in the PDCCH-ConfigSIB1 information element (IE) in the MIB. The base station may choose not to provide such reference as well. In general, the SIB1 carries information relevant to evaluating whether a UE is allowed to access a cell and also defines the scheduling of other system information. The SIB1 also provides radio resource configuration information that is common for all UEs, and (cell) barring information required for unified access control.

An SSB includes reference signals as well as a PBCH which contains the MIB. The MIB provides, among others, the following information elements (IEs) of interest:
- *PDCCH-ConfigSIB1* - indicates the time/frequency resources that carry the physical channels (e.g., PDCCH and PDSCH) which contain SIB1, when the SSB is the cell-defining SSB. Otherwise, e.g., when the SSB is not a cell-defining SSB, this IE in the MIB (optionally) indicates the location of a cell-defining SSB that can carry a valid SIB1.
- *cellBarred* - informs the UE whether the UE is allowed to camp on this cell (i.e., on the cell that is transmitting the SSB that includes the MIB).
- *intraFreqReselection -* informs the UE whether there are other cells (also transmitting SSBs) in the same frequency band.

The interpretation of *PDCCH-ConfigSIB1* is specified in Tables 13-1 through 13-15 of the 3GPP TS38.213 specification. A Redcap UE expects the initial BWP configuration for Redcap UEs to be no greater than the BW supported by the Redcap UE, e.g., no greater than 20MHz. A Redcap UE also expects to find a cell-defining SSB that includes the reference signal interpreted by the UE as the reference signal of the serving cell. Finally, the cell-defining SSB is also be expected to carry the SIB1 information for Redcap UEs.

### Redcap Device and Legacy Device Coexistence Issues

In certain scenarios, a Redcap UE may have to perform downlink (DL) communications over an initial DL bandwidth part (BWP) shared with other UEs, with the initial DL BWP having a higher bandwidth than the BW supported by the Redcap UE with respect to the other UEs. However, when the existing base station (e.g., a base station, such as a gNB, of a cell) intends to support a Redcap device and the base station operates on a cell which has a channel bandwidth (CHBW) greater than the BW supported by the Redcap device (e.g., greater than 20MHz) and the initial DL BWP is also greater than the Redcap supported BW (e.g., greater than 20 MHz), then the base station cannot use the existing configuration that is currently outlined in the present 3GPP standard. Furthermore, if the base station creates another initial DL BWP just for the Redcap device, then a legacy device may also start camping on the cell by virtue of relying on the existing configuration.

### Figure 8

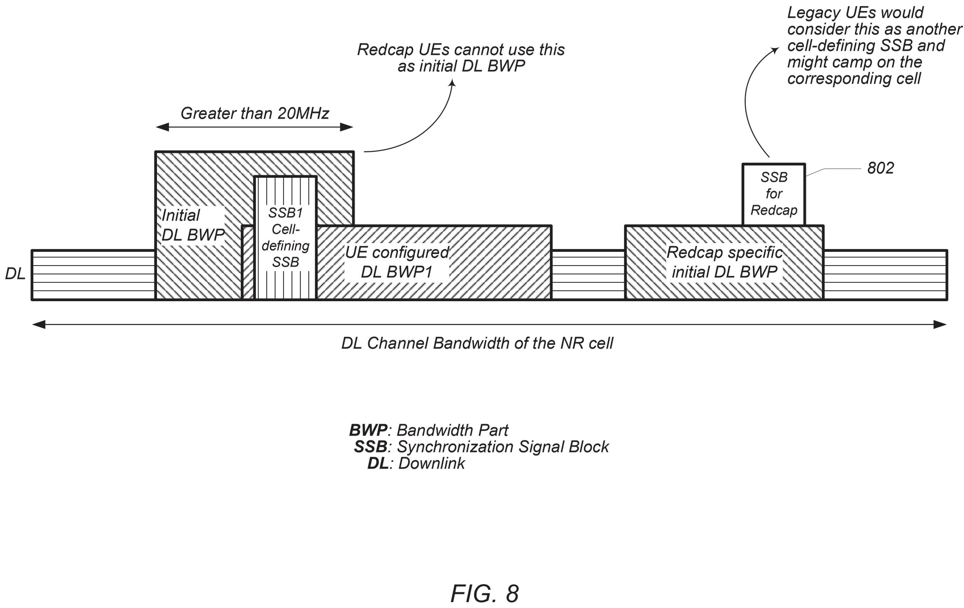

The aforementioned problem is illustrated in Figure 8, which shows a simplified diagram of SSB transmissions and CHBW and BWP configuration, as relating to the current 3GPP standard, when the initial DL BWP is greater than the specified BWP size supported by Redcap device, e.g., greater than 20MHz. As indicated in Figure 8, when the initial DL BWP has a bandwidth greater than that supported by the Redcap UE (e.g., the bandwidth is greater than 20 MHz for an FR1 Redcap device), the Redcap device cannot use that initial DL BWP as the Redcap device's initial DL BWP. On the other hand, SSB 802, which the base station created just for the Redcap device, may also be interpreted by legacy devices as another cell-defining SSB and the legacy devices may also begin camping on the corresponding cell even though they might not have been intended to camp on that cell (for example if that cell had been indicated as being barred to the legacy UEs).

### Successful Coexistence of Redcap Devices and Legacy Devices

In order to address at least some of the issues outlined above, a process may be implemented to enable coexistence of Redcap devices and non-Redcap devices (e.g., legacy devices) without either group of devices accessing and/or detecting (or attempting to access and/or detect) unintended information.

### Figure 9

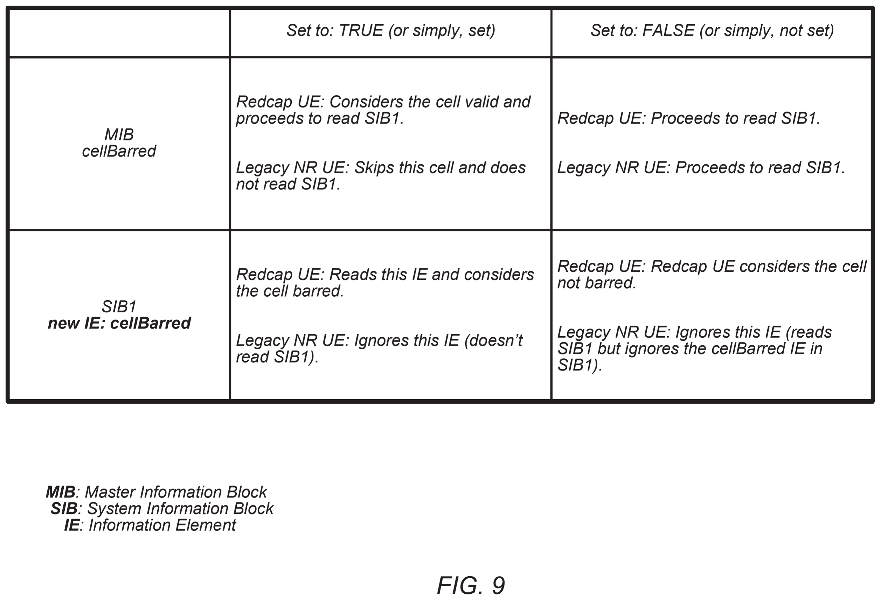

Figure 9 shows a table illustrating proposed procedures for ensuring successful coexistence of Redcap devices and legacy devices based on the *cellBarred* indication.

According to a first option, Redcap UEs may ignore a TRUE *cellBarred* indication when detecting a *cellBarred* IE set to TRUE (e.g., set to barred), in a given SSB. The Redcap UE may not consider that cell to be barred, and ignore this IE. This may be applicable to all Redcap UEs. In other words, unless the SSB is specific to the Redcap UE, the Redcap UE may simply ignore the indication provided by the *cellBarred* IE when that IE is set to TRUE (e.g., set to barred). As indicated in Figure 9, when *cellBarred* in MIB is set to TRUE, a Redcap UE may still consider the cell valid (not barred) and proceed to read SIB1. A non-Redcap (e.g., legacy) UE may skip this cell (consider it barred based on the TRUE indication) and not read SIB1. When *cellBarred* in MIB is set to FALSE (not barred), both the Redcap UE and legacy UE (or non-Redcap UE) may proceed to read SIB1.

According to a second option, in some way building on the first option, when the network (or cell) actually intends to bar Redcap UEs, then Redcap-UE-specific barring may be provided in SIB1. In other words, a new IE, specifically a *cellBarred* IE, may be introduced and included in SIB1 to provide cell barring information for Redcap UEs in SIB1. As indicated in Figure 9, when *cellBarred* in SIB1 is set to TRUE (barred), a Redcap UE may read this IE and consider the cell barred. When *cellBarred* in SIB1 is set to FALSE (not barred), the Redcap UE may consider the cell not to be barred.

According to a third option, the new cell-barring information element (new *cellBarred* IE) may be included in SIB1 exclusively for Redcap UEs, and may be ignored by non-Redcap UEs, or legacy UEs. As indicated in Figure 9, regardless of whether the *cellBarred* IE in SIB1 is set to TRUE or FALSE, it is completely ignored by a legacy UE when reading SIB1. Specifically, when *cellBarred* in MIB is set to TRUE, the legacy/non-Redcap UE does not even read SIB1. When *cellBarred* in MIB is set to FALSE, the legacy/non-Redcap UE proceeds to read SIB1 but simply ignores the *cellBarred* IE in SIB1.

### Figure 10

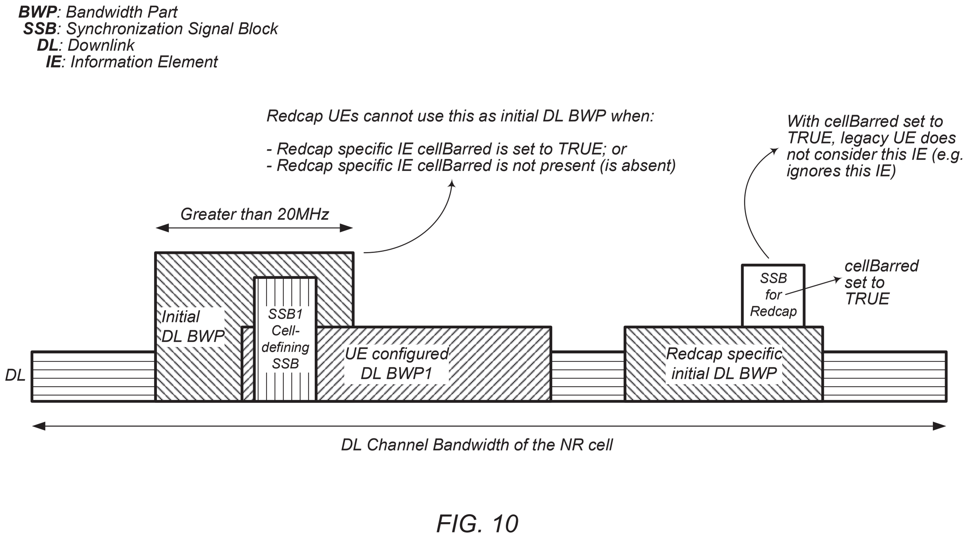

Figure 10 shows a simplified diagram illustrating a first proposed SSB transmission(s) and channel bandwidth (CHBW) and bandwidth part (BWP) configuration for initial access to a cell (e.g., via a base station) by a device, e.g., a wireless communication device or UE, pursuant to the options presented with respect to Figure 9, according to some embodiments. As indicated in Figure 10, in this example the initial DL BWP has a BW greater than 20MHz. Redcap UEs may only camp on the cell if the SIB1 of the SSB includes Redcap configuration information and/or explicitly sets the new *cellBarred* IE in SIB1 to FALSE. If the *cellBarred* IE in SIB1 is absent, then a Redcap UE may consider the cell to be a cell that does not support Redcap devices and may therefore assume the cell is barred for Redcap devices.

### Figure 11

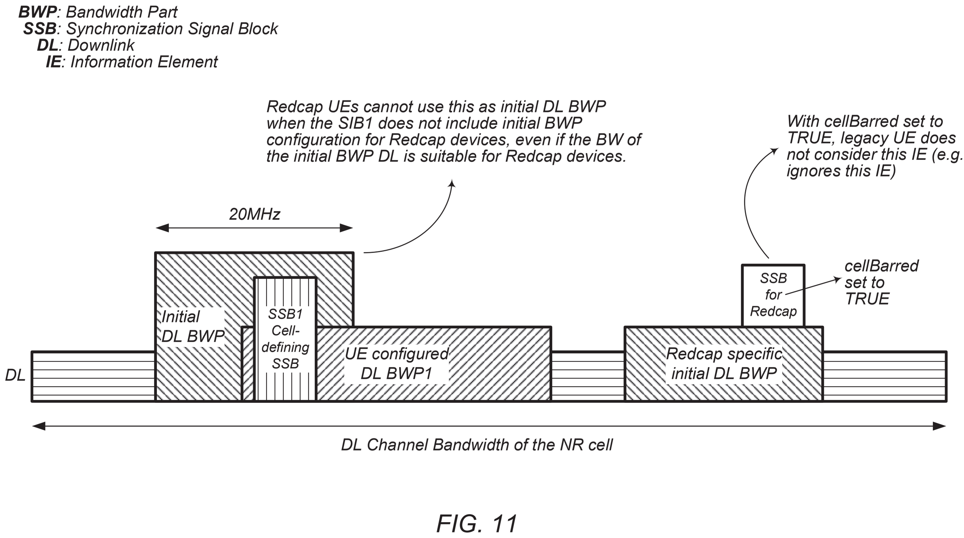

Figure 11 shows a simplified diagram illustrating a second proposed SSB transmission(s) and channel bandwidth (CHBW) and bandwidth part (BWP) configuration for initial access to a cell (e.g., via a base station) by a device, e.g., wireless communication device or UE, pursuant to the previously presented options, according to some embodiments. As indicated in Figure 11, in this example the initial DL BWP has a BW of 20MHz, or more generally the DL BWP has a BW supported by Redcap devices. In such a case, the presence of initial BWP configuration explicitly for Redcap UEs may be used as an indicator of support for Redcap devices by the cell, instead of the Redcap UE using an explicit *cellBarred* IE to determine whether or not the cell is barred to the Redcap UE. In other words, the UE may interpret detecting information for an initial BWP for Redcap UEs in SIB1 as an indication that the cell allows Redcap devices/UEs. On the other hand, the absence of an initial BWP for Redcap UEs in SIB1 may be interpreted by the UE as the cell being barred for Redcap devices/UEs.

### Figure 12

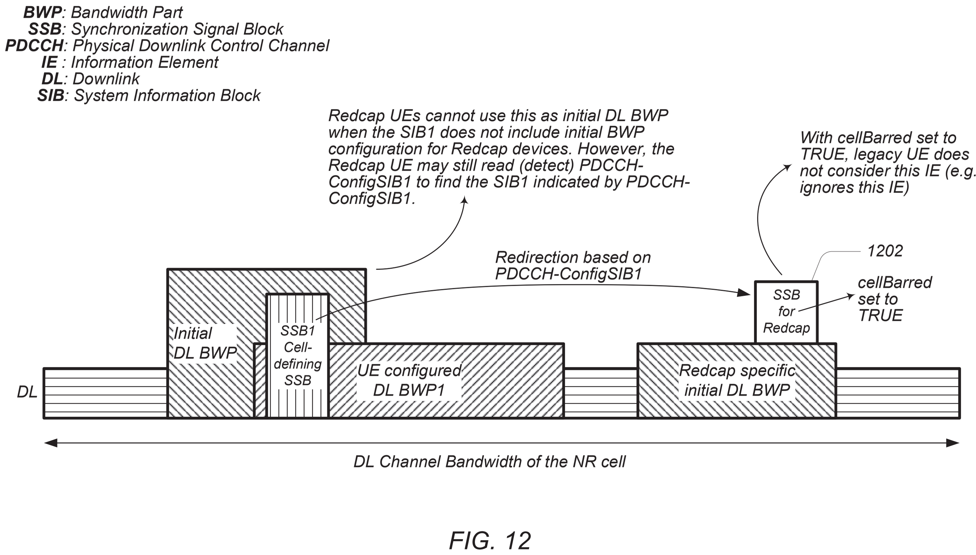

Figure 12 shows a simplified diagram illustrating a third proposed SSB transmission(s) and channel bandwidth (CHBW) and bandwidth part (BWP) configuration for initial access to a cell (e.g., via a base station) by a device, e.g., wireless communication device or UE, pursuant to the previously presented options, according to some embodiments. Figure 12 illustrates how a Redcap UE may be assisted in identifying/determining where Redcap supporting cell(s) are located in the frequency spectrum/band. As shown in Figure 12, when a cell is barred in MIB and the SIB1 explicitly states that Redcap UEs are barred, the Redcap UEs may still read the *PDCCH-ConfigSIB1* of this barred cell to determine the location of the next SSB that includes assistance information for Redcap UEs. Accordingly, as also indicated in Figure 12, the initial DL BWP corresponding to SSB1 is not used by the Redcap UE when the SIB1 in SSB1 does not include initial BWP configuration for Redcap devices. However, the Redcap UE may still read the *PDCCH-ConfigSIB1* even though the cell is barred, and the *PDCCH-ConfigSIB1* may indicate to the Redcap UE where SSB 1202 is located, where SSB 1202 may include assist information for Redcap UEs.

### Figure 13

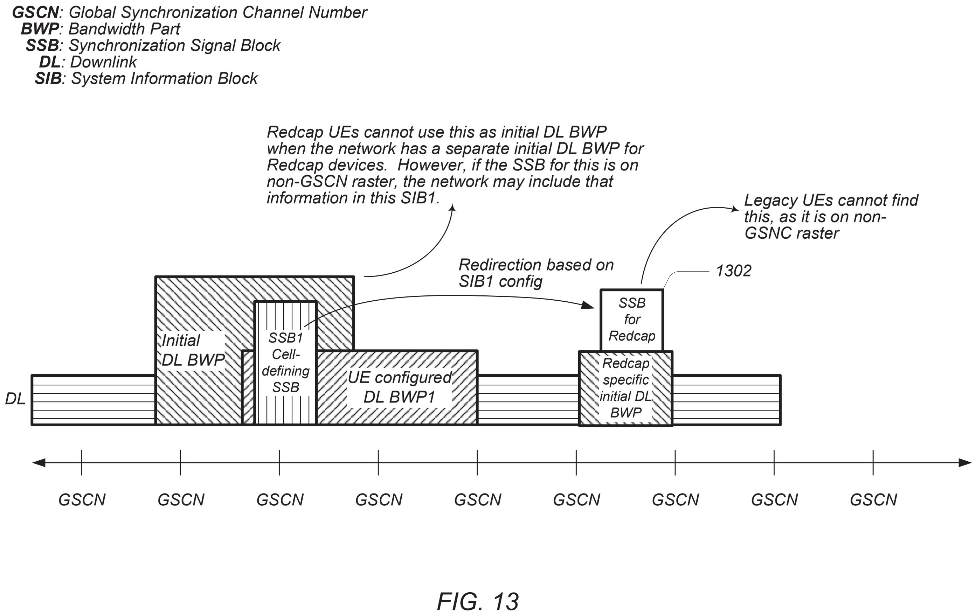

Figure 13 shows a simplified diagram illustrating a fourth proposed SSB transmission(s) and channel bandwidth (CHBW) and bandwidth part (BWP) configuration for initial access to a cell (e.g., via a base station) by a device, e.g., wireless communication device or UE, pursuant to the previously presented options, according to some embodiments. When the Redcap specific SSBs are placed on a non-GSCN raster, then the Redcap UEs may not find these SSBs during a cell search. To assist a Redcap UE with identifying/determining where Redcap supporting cell(s) are located in the frequency spectrum/band, the network may provide explicit information in SIB1 for cells that support Redcap devices/UEs but without including the initial BWP for legacy devices. The information may include the location of the next non-GSCN location of an SSB that includes information that assists Redcap devices. The network can thus place the Redcap specific SSBs at non-GSCN locations. As also indicated in Figure 13, the initial DL BWP corresponding to SSB1 is not used by the Redcap UE as its initial BWP when the network defines a separate initial DL BWP for Redcap devices/UEs. However, when the Redcap specific SSB, e.g., SSB 1302 as shown in Figure 13, is at a non-GSNC location (in the frequency domain), the network may include information in the SIB1 of SSB1 to indicate to the Redcap UE where SSB 1302 is located. The Redcap UE is then redirected to SSB 1302 as the cell-defining SSB for the Redcap device, based on the information included in the SIB1 of SSB1.

### Figure 14

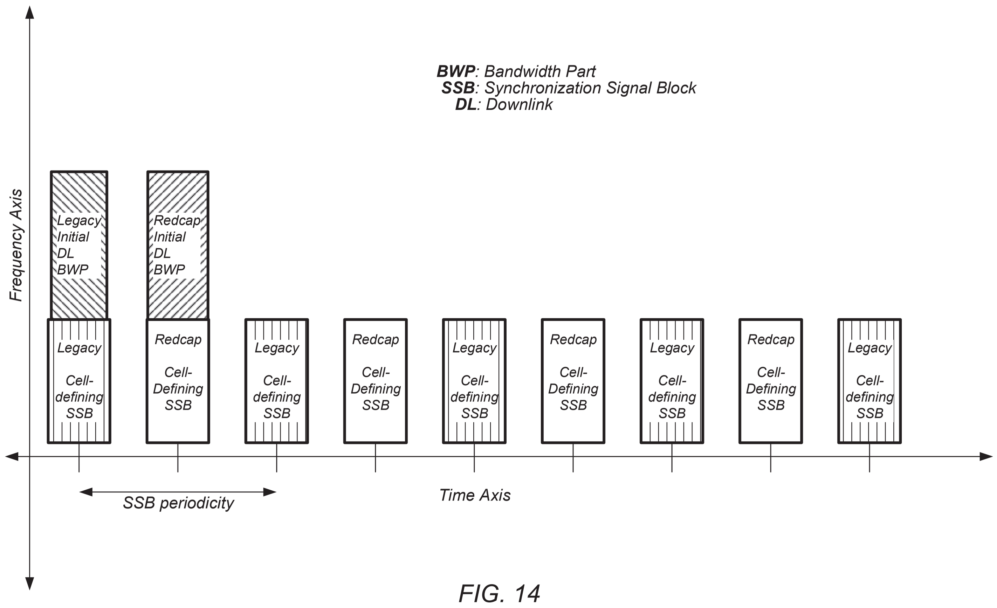

In some embodiments, SSBs for Redcap and non-Redcap devices/UEs may be time domain multiplexed, as illustrated in Figure 14. As illustrated in Figure 14, the network may broadcast the Redcap specific cell-defining SSB and legacy cell-defining SSB in the same frequency location, but in a time-multiplexed manner. The Redcap UE, upon detecting *cellBarred* is set to TRUE, may search for the SSB in the same frequency location, but at a different time to check whether the network broadcasts another SSB meant for Redcap devices/UEs. These SSBs may point to different (possibly overlapping) initial DL BWPs meant for legacy UEs and Redcap UEs, respectively.

### Use of SSB-PositionsInBurst

In some embodiments, the network, cell, or base station may use a dedicated IE, *SSB-PositionsInBurst,* in SIB1 to provide information regarding the set of SSB burst positions that the network is broadcasting. Each burst may be assumed to be broadcasted with a different beam, with up to a specified number, e.g., 64, of possible beams. The network may reserve some of these SSB burst positions for Redcap devices/UEs and other SSB burst positions for non-Redcap devices/UEs. Redcap UEs may be provided with (or may be assigned) additional SSB positions/locations (in the frequency domain) meant only for Redcap UEs. When the Redcap UEs reads the SIB1 and this additional configuration information is present in SIB1, the Redcap UE is enabled to determine/locate the SSB bursts intended for Redcap operation.

For example, if a first number, X, of SSBs are used in one SSB burst on the same frequency in the cell, then the following options may be implemented:
- *Option 1:* A second number, Y, of SSBs (from among the number, X, of SSBs) may include MIB A for legacy UEs, and a third number, Z, of SSBs (from among the number, X, of SSBs) may include MIB B for Redcap UEs. MIB A and MIB B may each clearly indicate which type of UE is barred (e.g., a new bit may be added in MIB to distinguish between Redcap devices/UEs and legacy devices/UEs). MIB A and MIB B may each include different respective *PDCCH-ConfigSIB1* values to direct different UEs to different CORESETs for SIB1.
- *Option 2:* A second number, Y, of SSBs (from among the number, X, of SSBs) may include MIB A for legacy UEs, and a third number, Z, of SSBs (from among the number, X, of SSBs) may include MIB B for Redcap UEs. MIB A and MIB B may each include their own respective bar settings (e.g., different *cellBarred* settings), but Redcap UEs may continue on to read the SIB1 regardless of the value of the bar setting. MIB A and MIB B may each include different respective *PDCCH-ConfigSIB1* values to lead different UEs to different CORESETs for SIB. The network, cell, or base station may indicate in SIB1 whether the current SIB1 is for a Redcap UE or a legacy UE, and may further indicate (in the *SSB-PositionsInBurst* IE) which SSBs are for Redcap UEs and which SSBs are for legacy UEs.
- *Option 3:* SSBs include the same MIB for all kinds of UEs, and if the legacy UEs and Redcap UEs are not barred in MIB, then the network, cell, or base station may additionally indicate in SIB1 where the SIB1 for the Redcap UE is located.
The options listed above may be implemented, for example, through modifying and/or revising the relevant code portions provided in 3GPP TS 38.331 v.16.5.0 section 6.2.2, page 298 and 6.3.2, pages 628-29.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present invention may be realized in any of various forms. For example, in some embodiments, the present invention may be realized as a computer-implemented method, a computer-readable memory medium, or a computer system. In other embodiments, the present invention may be realized using one or more custom-designed hardware devices such as ASICs. In other embodiments, the present invention may be realized using one or more programmable hardware elements such as FPGAs.

In some embodiments, a non-transitory computer-readable memory medium (e.g., a non-transitory memory element) may be configured so that it stores program instructions and/or data, where the program instructions, if executed by a computer system, cause the computer system to perform a method, e.g., any of a method embodiments described herein, or, any combination of the method embodiments described herein, or, any subset of any of the method embodiments described herein, or, any combination of such subsets.

In some embodiments, a device (e.g., a UE) may be configured to include a processor (or a set of processors) and a memory medium (or memory element), where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.
Prior to setting the claims, the following clauses are to further aid in understanding the subject matter of the present disclosure:
1. A method for wireless communications, the method comprising:
   receiving, at a device, a cell-defining first synchronization signal block (SSB), wherein the first SSB includes a first information block (IB) indicating whether or not a cell defined by the SSB is barred for the device;
   interpreting the cell to be valid and not barred for the device regardless of what is indicated by the first IB; and
   reading a second IB included in the first SSB to determine whether or not to connect to the cell.
2. The method of clause 1, wherein the device is a reduced capability device.
3. The method of clause 2, further comprising:
   interpreting the cell to be valid for the device in response to the second IB including information for an initial bandwidth part for reduced capability devices; and
   interpreting the cell to be barred for the device in response to the second IB not including information for an initial bandwidth part for reduced capability devices.
4. The method of clause 1, wherein the first IB indicates whether or not the cell is barred for one or more additional devices different from the device.
5. The method of clause 4, wherein the one or more additional devices are not reduced capability devices.
6. The method of clause 1, further comprising:
   interpreting the cell to be barred for the device in response to the second IB indicating that the cell is barred.
7. The method of clause 6, further comprising:
   locating a cell-defining second SSB indicated by the second IB, in response to the second IB indicating that the cell is barred;
   receiving, at the device, the second SSB; and
   determining, based on information included in the second SSB, whether to connect to a second cell defined by the second SSB.
8. The method of clause 1, further comprising:
   determining, from information included in the second IB, a location of a second SSB that defines a second cell, wherein the location of the second SSB is not on a Global Synchronization Channel Number;
   receiving, at the device, the second SSB; and
   determining, based on information included in the second SSB, whether to connect to the second cell.
9. The method of clause 1, wherein the SSB is not specific to the device.
10. The method of clause 1, wherein the size of an initial downlink bandwidth part supported by the device is lower than the size of an initial downlink bandwidth part provisioned by the cell for devices to connect to the cell.
11. The method of clause 1, further comprising:
   searching, in response to determining not to connect to the cell, for a second SSB in a same frequency location where the first SSB was received, subsequent to receiving the first SSB.
12. The method of clause 11, wherein the device is a reduced capability device, and wherein the first SSB is a legacy cell-defining SSB and the second SSB is a reduced-capability-specific cell-defining SSB.
13. An apparatus comprising:
   a processor configured to implement the method of any of clauses 1 to 12.
14. A device comprising:
   radio circuitry configured to enable wireless communications of the device; and
   an apparatus as recited in clause 13.
15. A non-transitory memory element storing instructions executable by a processor to implement the method of any of clauses 1 to 12.

## Claims

1. A method, comprising:
receiving a cell-defining first synchronization signal block (SSB), wherein the cell-defining first SSB includes a first master information block (MIB);
receiving a first system information block type 1 (SIB1) including an indication of a first set of SSB burst positions for the cell-defining first SSB associated with a first bandwidth part (BWP), wherein the cell-defining first SSB is broadcast by a network according to an SSB periodicity;
determining a periodically occurring second SSB associated with a second BWP, wherein the second BWP is different from the cell-defining first BWP, and wherein the second SSB is at a time offset relative to the cell-defining first SSB; and
receiving the second SSB.

2. The method of claim 1, wherein the first SIB1 includes an indication of whether or not reduced capability (RedCap) devices are barred from the cell.

3. The method of claim 1, wherein the second SSB includes a second MIB, wherein the first MIB is the same as the second MIB.

4. The method of claim 1, wherein the second SSB includes a second MIB for reduced capability (RedCap) devices, wherein the second MIB is different from the first MIB.

5. The method of claim 1, wherein the first and second BWPs are overlapping.

6. The method of claim 1, wherein the first set of SSB burst positions being broadcast are indicated in the first SIB1.

7. The method of claim 1, wherein the first SIB1 includes information to indicate a location of the second SSB.

8. The method of claim 1, wherein the second SSB is not a Global Synchronization Channel Number (GSCN) raster.

9. A device comprising:
radio circuitry configured to enable wireless communications of the device; and
a processor configured to interoperate with the radio circuitry to perform the method steps of any of claims 1-8.

10. A base station comprising:
radio circuitry configured to enable wireless communications of the base station; and
a processor configured to interoperate with the radio circuitry to:
transmit a cell-defining first synchronization signal block (SSB), wherein the cell-defining first SSB includes a first master information block (MIB);
transmit a first system information block type 1 (SIB1) including an indication of a first set of SSB burst positions for the cell-defining first SSB associated with a first bandwidth part (BWP), wherein the cell-defining first SSB is broadcast by a network according to an SSB periodicity;
transmit a periodically occurring second SSB associated with a second BWP, wherein the second BWP is different from the first BWP, and wherein the second SSB is at a time offset relative to the cell-defining first SSB.

11. The base station of claim 10, wherein the first SIB1 includes an indication of whether or not reduced capability (RedCap) devices are barred from the cell.

12. The base station of claim 10, wherein the second SSB includes a second MIB, wherein the first MIB is the same as the second MIB.

13. The base station of claim 10, wherein the second SSB includes a second MIB for reduced capability (RedCap) devices, wherein the second MIB is different from the first MIB.

14. The base station of claim 10, wherein the first and second BWPs are overlapping.

15. The base station of claim 10, wherein the first set of SSB burst positions being broadcast are indicated in the first SIB1, and
wherein the first SIB1 includes information to indicate a location of the second SSB.
